# EUROPÄISCHE PATENTSCHRIFT

(11) **EP 1 367 013 B1**
(45) Veröffentlichungstag und Bekanntmachung des Hinweises auf die Patenterteilung: **20.07.2005**
(21) Anmeldenummer: 03011453.2
(22) Anmeldetag: 20.05.2003
(51) Int. Cl.: B65G 63/00

(54) **Verfahren zur Automatisierung des Be- und Entladens von Containerschiffen in Containerterminals und entsprechende Kranautomatisierungsanlage**
Method for the automation of the unloading and loading of containerships in containerterminal and the corresponding crane automation device
Procédé d'automatisation du chargement et du déchargement de porte-conteneurs dans les terminaux de conteneurs ainsi que le dipositif correspondant de grue automatisée

(30) Priorität: 31.05.2002 DE 10224312
(43) Veröffentlichungstag der Anmeldung: 03.12.2003
(73) Patentinhaber: SIEMENS AKTIENGESELLSCHAFT, 80333 München (DE)
(72) Erfinder: Holland, Maarten, 91099 Poxdorf (DE); Wichner, Wolfgang, 90530 Wendelstein (DE)

(56) Entgegenhaltungen:
- US-A- 3 952 891
- US-A- 4 973 219

## Beschreibung

Die Erfindung bezieht sich auf ein Verfahren zur Automatisierung des Be- und Entladens von Containerschiffen in Containerterminals nach dem Oberbegriff des Patentanspruchs 1.

Während des Be- und Entladens von Containerschiffen mittels Containerkranen ist es erforderlich, einem Kranführer oder der Automatisierungsanlage des Containerkrans den als nächsten zu ladenden oder zu entladenden Container vorzugeben.

Zwar ist es seit einigen Jahren durchaus üblich, den Stauplan eines Containerschiffes elektronisch vom Ablegehafen zum Zielhafen zu übermitteln, jedoch gibt es bis heute keine effiziente Datenübertragung zwischen einem Hafenleitrechner des Zielhafens einerseits und dem Kranführer eines Containerkrans und seiner ihn unterstützenden Kranautomatisierungsanlage.

Daher erhält der Kranführer bei Beginn einer Schiffsbe- oder -entladung Ladelisten in Papierform. Der Kranführer entscheidet dann selbständig und willkürlich über die Reihenfolge der Transporte zwischen Containerschiff und Stapelplatz; alternativ erhält der Kranführer Vorgaben per Funk von Decksleuten auf dem Containerschiff. Hierdurch ergibt sich naturgemäß ein beträchtlicher Personalaufwand, wobei darüber hinaus für die Ent- bzw. Beladung eines Containerschiffs ein hoher Zeitaufwand erforderlich ist. Abgesehen davon, ergibt sich bei diesen herkömmlich gesteuerten Schiffsbe- und -entladungen eine vergleichsweise hohe Fehlerquote.

Aus dem Stand der Technik sind Verfahren zur Automatisierung bzw. Kranautomatisierungsanlagen bekannt, die jedoch nicht zu insgesamt befriedigenden Lösungen beim Umschlag von Containern in Containerterminals geführt haben.

Aus der US-A-4 973 219 ist ein Verfahren zur Automatisierung des Be- und Entladens von Containerschiffen in Containerterminals bekannt, bei dem mittels mit Kranautomatisierungsanlagen gesteuerten Containerkranen Container zwischen den Containerschiffen und einem Stapelplatz des Containerterminals transportiert werden. Zu der Kranautomatisierungsanlage gehört ein PC, der an einen Hafenleitrechner angeschlossen ist, in den die Schiffsladung betreffende Daten eingegeben werden. Ein Stauplan der mittels des Containerkrans aktuell zu bearbeitenden Schiffsbay kann von dem Hafenleitrechner an den PC der Kranautomatisierungsanlage weitergeleitet werden. Dieser an den PC übermittelte Stauplan kann auf einem Display der Kranautomatisierungsanlage dargestellt werden.

Ausgehend von dem vorstehend geschilderten Stand der Technik liegt der Erfindung die Aufgabe zugrunde, den Be- bzw. Entladevorgang zuverlässiger zu gestalten, insbesondere für den Fall, dass zwischen der tatsächlichen aktuellen Containeranordnung auf einem Schiff und dem an den Hafenleitrechner übermittelten Stauplan Differenzen vorliegen, wobei darüber hinaus eine bessere Übersichtlichkeit der und Eingriffsmöglichkeit in die Be- bzw. Entladevorgänge realisiert sein soll.

Diese Aufgabe wird erfindungsgemäß durch die Merkmale im kennzeichnenden Teil des Patentanspruchs 1 gelöst.

Hierdurch wird sowohl eine bessere Darstellbarkeit des Be- bzw. Entladungsvorgangs erzielt, wobei darüber hinaus etwaig existierende Unterschiede zwischen dem an den Hafenleitrechner übermittelten Stauplan und der tatsächlichen Situation an Bord eines Containerschiffes vor Einleitung des eigentlichen Be- oder Entladevorgangs erfasst werden, so dass sie bei der Planung des Be- bzw. Entladevorgangs berücksichtigt werden können. Die absoluten Raumkoordinaten des auf dem Containerschiff gebildeten sog. Containergebirges bzw. der dieses bildenden Container sind genau erfassbar, wobei die Lage des Containerschiffes und die Tide berücksichtigt werden können.

Der Stauplan der aktuell zu bearbeitenden Schiffsbay wird vorzugsweise als Schiffsquerschnitt gezeigt.

Wenn die Raumkoordinaten des als nächsten anzufahrenden Stauplatzes simultan mit der Anzeige dieses Stauplatzes auf dem Touchscreen an die Kranautomatisierungsanlage weitergeleitet werden, deren Zielvorgabemechanismus auf dem selben PC abläuft, der auch dem Touchscreen zugeordnet ist, ist ein automatisiertes Anfahren des als Zielpunkt vorgegebenen Stauplatzes bzw. Containers möglich. Mit Ausnahme des Absetzens oder des Aufnehmens von Containern auf dem Containerschiff können dann alle Bewegungen des Containerkrans automatisiert werden.

Um Sondersituationen beherrschen zu können oder eine plötzlich entstandene Anforderung erfüllen zu können, ist es vorteilhaft, wenn ablaufende Automatikvorgänge auf dem Touchscreen visualisiert werden und mittels einer Tasteinrichtung Eingriffsmöglichkeiten vorgesehen sind, die eine Modifizierung der Zielvorgabe zulassen.

Vorteilhaft wird unter Berücksichtigung der bei der Schiffsbeladungsprofilerfassung ermittelten Daten für den Zielvorgabemechanismus der Kranautomatisierungsanlage und als Hindernisse bei den Transportvorgängen eine optimale Raumtrajektorie für den Containertransport berechnet.

Vorteilhaft laßt sich das erfindungsgemäße Verfahren durch eine Containernummerverifikation ergänzen, bei dem bzw. bei der die Containernummer jedes zu be- bzw. entladenden Containers verifiziert wird, indem die Containernummer des jeweils am Containerkran befindlichen Containers mittels einer Kameraeinrichtung optisch erfaßt und in einer der Kameraeinrichtung zugeordneten Steuereinheit oder dem mit der Steuereinheit verbundenen Hafenleitrechner mit der für den betreffenden Stauplatz vorgegebenen Containernummer abgeglichen wird.

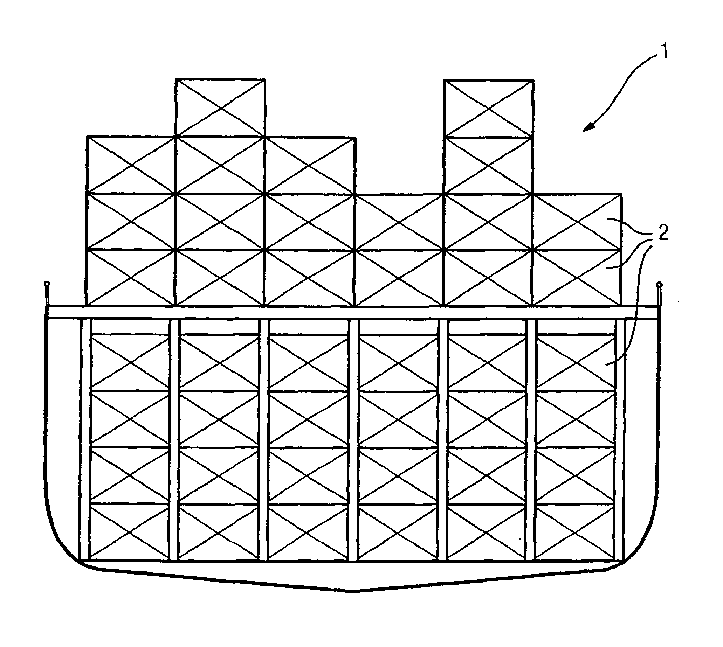

Im folgenden wird die Erfindung anhand einer Ausführungsform unter Bezugnahme auf die Zeichnung näher erläutert, in deren einziger Figur ein Stauplan in Form eines Querschnitts durch ein Containerschiff dargestellt ist.

Das Be- und Entladen von Containerschiffen findet üblicherweise in Containerterminals statt, die zu diesem Zweck und für den weiteren Umschlag von Containern 2 in besonderer Weise ausgestaltet sind. Hierbei werden Container 2 zwischen Containerschiffen und einem Stapelplatz oder mehreren Stapelplätzen des Containerterminals hin und her transportiert.

Hierzu werden Containerkräne eingesetzt, die in modernen Containerterminals mit Kranautomatisierungsanlagen ausgerüstet sind.

Bei dem erfindungsgemäßen Verfahren zur Automatisierung des Be- und Entladens von Containerschiffen in Containerterminals kommt eine Kranautomatisierungsanlage zum Einsatz, mittels der ein Containerkran steuerbar ist und die einen PC aufweist, der mit einem Hafenleitrechner des Containerterminals in Verbindung steht, und zwar über eine vorteilhaft als Ethernet ausgebildete Datenkopplung.

Im Hafenleitrechner des Containerterminals ist ein Stauplan eines Beladen das Containerterminal anlaufenden Containerschiffes registriert, wobei dieser Stauplan in einer geeigneten Weise vom Betreiber des Containerschiffes, einer Schiffsverladestelle od.dgl. zum Hafenleitrechner des Containerterminals übermittelt wurde.

Über die Datenkopplung zwischen dem Containerterminal und dem PC der Kranautomatisierungsanlage desjenigen Containerkrans, der im dargestellten Ausführungsbeispiel zur Entladung des Containerschiffs eingesetzt werden soll, wird der Stauplan in den PC der Kranautomatisierungsanlage weitergeleitet. Somit liegt in der Kranautomatisierungsanlage des Containerkrans der Stauplan der aktuell zu bearbeitenden Schiffsbay vor.

Die Kranautomatisierungsanlage verfügt über einen an ihren PC angeschlossenen Touchscreen, mittels dem der in der einzigen Figur im Schiffsquerschnitt 1 dargestellte Stauplan angezeigt wird.

Im PC der Kranautomatisierungsanlage findet eine Zielvorgabe für den Containerkran nach festen Strategien, z.B. nach vertikalem Umschlagsbetrieb, horizontalem Umschlagsbetrieb, statt. Alternativ dazu kann der Hafenleitrechner über die Datenkopplung das nächste anzufahrende Ziel bzw. den nächsten anzufahrenden Stauplatz vorgeben. Auf dem Touchscreen wird der Stauplan der aktuell zu bearbeitenden Schiffsbay dargestellt, wie bereits erwähnt. Dem Containerkranführer wird durch Farbumschlag angezeigt, welcher Stauplatz bzw. Container 2 als nächster angefahren werden soll. Die Raumkoordinaten des als nächsten anzufahrenden Stauplatzes bzw. Containers 2 werden simultan mit der Anzeige dieses Stauplatzes bzw. Containers 2 durch Farbumschlag auf dem Touchscreen an die Kranautomatisierungsanlage weitergegeben, deren Zielvorgabemechanismus auf dem auch dem Touchscreen zugeordneten PC läuft.

Der als nächstes zur Bearbeitung ausgewählte Stauplatz bzw. Container 2 wird dann mittels des durch die Kranautomatisierungsanlage gesteuerten Containerkrans automatisch angefahren. Mittels des Touchscreens wird der Kranführer über die ablaufenden Automatikvorgänge informiert; der Touchscreen ist des weiteren mittels einer z.B. als +/- - Taster ausgebildeten Tasteinrichtung dafür ausgerüstet, daß seitens des Kranführers die Möglichkeit für Eingriffe, z.B. zur Modifizierung der Zielvorgabe od.dgl., in den automatischen Betrieb besteht, wobei die Notwendigkeit hierfür auf aktuellen Veränderungen der Situation beruhen kann.

Eine Krankatze des Containerkrans fährt zu Beginn der Be- und Entladearbeit an einer neuen Schiffsbay einmal über die gesamte Schiffsbay; hierbei wird durch eine beispielsweise als Laserabtasteinheit ausgebildete Abtasteinrichtung, die an der Krankatze des Containerkrans vorgesehen ist, eine Schiffsbeladungsprofilerfassung durchgeführt. Das Abtast- bzw. Scanergebnis dieser Schiffsbeladungsprofilerfassung erlaubt im PC der Automatisierungsanlage des Containerkrans eine Plausibilitatsprüfung des an diesen PC übermittelten Stauplanes.

Darüber hinaus liefert das aus der Schiffsbeladungsprofilerfassung resultierende Abtast- bzw. Scanergebnis die absoluten Raumkoordinaten des in der einzigen Figur anhand des Schiffsquerschnitts 1 dargestellten Containergebirges, wobei die Lage des Schiffes und die Tide berücksichtigt wird. Die derart ermittelten Raumkoordinaten stehen für Zielvorgaben für die Kranautomatisierungsanlage und auch, soweit die Container 2 Hindernisse bilden, für die Berechnung einer optimalen Raumtrajektorie für den Containertransport zur Verfügung.

Um weitere Fehlerquellen beim Containerumschlag innerhalb des Containerterminals auszuschalten, ist der Containerkran mit einer geeignet angeordneten Kameraeinrichtung ausgerüstet. Mittels dieser Kameraeinrichtung kann eine an jedem Container an einer bestimmten Stelle vorhandene Containernummer immer dann zuverlässig optisch erfaßt werden, wenn der jeweilige Container am betreffenden Containerkran aufgenommen ist. Der Kameraeinrichtung ist eine Steuereinheit zugeordnet; mittels dieser Steuereinheit oder dem mit der Steuereinheit verbundenen Hafenleitrechner kann festgestellt werden, ob die von der Kameraeinrichtung optisch erfaßte Containernummer mit derjenigen Containernummer übereinstimmt, die für den betreffenden Stauplatz in der Steuereinheit bzw. im Hafenleitrechner aufgrund des dorthin übermittelten Stauplans vorgegeben ist. Hierdurch können Fehlpositionierungen von Containern auf dem Containerschiff oder auf dem Stapelplatz des Containerterminals verhindert werden.

Alternativ zu dieser optischen Erfassung der Containernummern umfaßt die vorliegende Erfindung jegliches System zur Erfassung der Containernummern, z.B. auch Systeme, welche den jeweiligen Container durch eine von ihm ausgesandte Antwort auf elektromagnetische Wellen erkennen. Die Container sind dafür mit Transpondern ausgestattet.

## Patentansprüche

1. Verfahren zur Automatisierung des Be- und Entladens von Containerschiffen in Containerterminals, bei dem mittels mit Kranautomatisierungsanlagen gesteuerten Containerkranen Container (2) zwischen den Containerschiffen und einem Stapelplatz des Containerterminals transportiert werden, einem PC der Kranautomatisierungsanlage von einem Hafenleitrechner über eine Datenkopplung ein Stauplan der mittels des Containerkrans aktuell zu bearbeitenden Schiffsbay übermittelt wird, und der an den PC übermittelte Stauplan auf einem Display der Kranautomatisierungsanlage dargestellt wird,
**dadurch gekennzeichnet, dass** auf dem als Touchscreen ausgebildeten Display im Stauplan der nächste anzufahrende Stauplatz, z.B. durch Farbumschlag, angezeigt wird, und dass eine Krankatze des Containerkrans zu Beginn der Be- bzw. Entladearbeit an einer neuen Schiffsbay einmal über die ganze Schiffsbay fahrt und eine Schiffsbeladungsprofilerfassung durchführt, wobei auf der Grundlage des bei der Schiffsbeladungsprofilerfassung erzielten Scannergebnisses eine Plausibilitätsprüfung des Stauplanes durchgeführt wird.

2. Verfahren zur Automatisierung nach Anspruch 1, bei dem der Stauplan der aktuell zu bearbeitenden Schiffsbay als Schiffsquerschnitt (1) dargestellt wird.

3. Verfahren zur Automatisierung nach Anspruch 1 oder 2, bei dem die Raumkoordinaten des als nächsten anzufahrenden Stauplatzes simultan mit der Anzeige dieses Stauplatzes auf dem Touchscreen der Kranautomatisierungsanlage vorgegeben werden, deren Zielvorgabemechanismus auf dem PC ablauft.

4. Verfahren zur Automatisierung nach einem der Ansprüche 1 bis 3, bei dem ablaufende Automatikvorgange auf dem Touchscreen visualisiert werden und bei dem mittels einer Tasteinrichtung Eingriffsmöglichkeiten bestehen, mittels denen - z.B. aus aktuellen übergeordneten Gründen - eine Modifizierung der Zielvorgabe ermöglicht wird.

5. Verfahren zur Automatisierung nach einem der Anspruche 1 bis 4, bei dem zur Schiffsbeladungsprofilerfassung eine Laserabtastung durchgeführt wird.

6. Verfahren zur Automatisierung nach einem der Ansprüche 1 bis 5, bei dem unter Berücksichtigung der bei der Schiffsbeladungsprofilerfassung ermittelten Daten fur den Zielvorgabemechanismus der Kranautomatisierungsanlage und als Hindernisse eine optimale Raumtrajektorie für den Containertransport berechnet wird.

7. Verfahren zur Automatisierung nach einem der Ansprüche 1 bis 6, bei dem die Containernummer jedes zu be- bzw. entladenden Containers (2) verifiziert wird, indem die Containernummer des jeweils am Containerkran befindlichen Containers (2) mittels einer Kameraeinrichtung optisch erfasst und in einer der Kameraeinrichtung zugeordneten Steuereinheit oder dem mit der Steuereinheit verbundenen Hafenleitrechner mit der für den betreffenden Stauplatz vorgegebenen Containernummer abgeglichen wird.

## Claims

1. Method of automating the loading and unloading of container ships in a container terminal, whereby containers (2) are transported between the container ships and a repository location in the container terminal by means of container cranes controlled by a crane automation system, a stowage plan of the ship cargo compartment which is to be handled by a container crane being transmitted from a harbour-side master computer via a data link to a PC of a crane automation system, and the stowage plan transmitted to the PC being shown on a display of the crane automation system,
**characterised in that**
the next following repository location is indicated on the display designed as a touch screen through a change in colour for example, and that a crane trolley of the container crane is moved once across the entire ship cargo compartment before loading or unloading containers to a new ship cargo compartment and executes a scanned stowage profile, a plausibility check of the stowage plan being executed on the basis of the results of the scanned stowage profile.

2. Method of automating according to Claim 1, whereby the stowage plan of the ship cargo compartment being handled is shown as a ship's cross section (1).

3. Method of automating according to Claim 1 or 2, whereby the space coordinates of the next following repository location are displayed on a touch screen of the crane automation system simultaneously with the display of this stowage plan, the desired target setting program of which is executed on the PC.

4. Method of automating according to one of Claims 1 to 3, whereby automatically executed operations are visualised on the touch screen, and a keying device allows manipulations in order to modify the target setting, for currently important reasons.

5. Method of automating according to one of the Claims 1 to 4, whereby a stowage profile is acquired through laser scanning.

6. Method of automating according to one of the Claims 1 to 5, whereby an optimum space trajectory for the container transport is calculated on the basis of data relating to the stowage profile for the target setting program of the crane automation system and obstacles.

7. Method of automating according to one of the Claims 1 to 6, whereby the container number of each container (2) to be loaded or unloaded is verified, by using a camera system to optically ascertain the container number of the container situated on the container crane in each instance, and comparing the ascertained container number in a control unit assigned to the camera system or a harbour-side master computer, connected to the control unit, with a predetermined container number for the corresponding repository location.

## Revendications

1. Procédé d'automatisation pour charger et pour décharger des navires porte-conteneurs dans des terminaux à conteneurs, d'après lequel
des conteneurs (2) sont transportés entre les navires porte-conteneurs et un lieu d'empilement du terminal à conteneurs à l'aide de grues à conteneurs commandées par des installations d'automatisation pour grue;
un programme d'arrimage pour le compartiment de navire à traiter à ce moment par la grue à conteneurs est transmis, par l'intermédiaire d'une liaison de données, à un ordinateur de l'installation d'automatisation pour grue par un ordinateur portuaire pilote et
le programme d'arrimage transmis à l'ordinateur est représenté sur un affichage de l'installation d'automatisation pour grue,
**caractérisé en ce que** dans le programme d'arrimage le lieu d'arrimage où on doit se rendre ensuite est indiqué sur un affichage sous forme d'écran tactile, par exemple par un changement de couleur, et
quand un travail de chargement ou de déchargement commence sur un nouveau compartiment de navire, un chariot roulant de la grue à conteneurs aborde une fois tout le compartiment de navire et il détecte le profil de chargement du navire, tout en soumettant le programme d'arrimage à un contrôle de vraisemblance en se fondant sur le résultat du balayage obtenu en détectant le profil de chargement du navire.

2. Procédé d'automatisation d'après la revendication 1, d'après lequel le programme d'arrimage pour le compartiment de navire à traiter à ce moment est représenté sous forme de coupe transversale de navire (1)

3. Procédé d'automatisation d'après la revendication 1 ou 2, d'après lequel les coordonnées spatiales du lieu d'arrimage à aborder ensuite sont prédéfinies en même temps que ce lieu d'arrimage est affiché sur l'écran tactile de l'installation d'automatisation pour grue dont le mécanisme indicateur du but se déroule sur l'ordinateur.

4. Procédé d'automatisation d'après l'une des revendications 1 à 3, d'après lequel des opérations automatiques en cours sont visualisées sur l'écran tactile et
un dispositif à touches permet d'intervenir par exemple pour modifier l'indication du but, par exemple pour des raisons momentanées d'une importance prépondérante.

5. Procédé d'automatisation d'après l'une des revendications 1 à 4, d'après lequel un balayage laser est réalisé pour détecter le profil de chargement du navire.

6. Procédé d'automatisation d'après l'une des revendications 1 à 5, d'après lequel on calcule une trajectoire spatiale optimale pour transporter les conteneurs en tenant compte d'une part des données élaborées pendant que le profil de chargement du navire est détecté et destinées au mécanisme indicateur du but de l'installation d'automatisation pour grue et d'autre part des obstacles.

7. Procédé d'automatisation d'après l'une des revendications 1 à 6, d'après lequel le numéro de chaque conteneur (2) à charger ou à décharger est vérifié en reconnaissant optiquement les numéros de chacun des conteneurs (2) placés sur la grue à conteneurs à l'aide d'un dispositif de caméra et il est comparé au numéro de conteneur prédéfini pour le, lieu d'arrimage en question à l'aide d'une unité de commande associée au dispositif de caméra ou d'un ordinateur portuaire pilote relié à l'unité de commande.
